**Europäisches Patentamt**

**European Patent Office**

**Office européen des brevets**

(11) Numéro de publication: **0 173 630**
**B1**

## FASCICULE DE BREVET EUROPÉEN

(45) Date de publication du fascicule du brevet:
18.05.88

(51) Int. Cl.⁴: **C 01 F 7/04,** C 01 F 7/46

(21) Numéro de dépôt: **85420118.3**

(22) Date de dépôt: **24.06.85**

(54) Purification des solutions d'aluminate de sodium du cycle bayer par elimination d'oxalate de sodium.

(30) Priorité: **25.06.84 FR 8410187**
**18.04.85 FR 8506283**

(43) Date de publication de la demande:
**05.03.86 Bulletin 86/10**

(45) Mention de la délivrance du brevet:
**18.05.88 Bulletin 88/20**

(84) Etats contractants désignés:
**CH DE FR GB IT LI NL**

(56) Documents cité:
**FR-A-2 328 660**
**GB-A-1 404 709**
**US-A-3 372 985**
**US-A-4 478 795**

(73) Titulaire: **ALUMINIUM PECHINEY, 23, rue Balzac,**
**F-75008 Paris Cédex 08 (FR)**

(72) Inventeur: **Fabre, Jean "Les Cigales", Impasse des**
**Rosiers La Mère de Dieu Brûlée, F-13090 Aix- en-**
**Provence (FR)**
Inventeur: **Lavalou, Eric, 5, avenue Maurice**
**Blondel, F-13100 Aix- en- Provence (FR)**
Inventeur: **Nicolas, François, Résidence Sainte**
**Victoire, F-13100 Aix- en- Provence (FR)**

(74) Mandataire: **Vanlaer, Marcel, PECHINEY 28, rue de**
**Bonnel, F-69433 Lyon Cédex 3 (FR)**

LIBER, STOCKHOLM 1988

**Description**

## DOMAINE TECHNIQUE

L'invention concerne un procédé d'épuration des solutions alcalines provenant de préférence de la décomposition de l'aluminate de sodium du cycle Bayer par précipitation de l'oxalate de sodium, grâce à l'introduction d'un agent approprié provoquant la déstabilisation de l'état de sursaturation dans lequel se trouve naturellement l'oxalate.

## PROBLEME POSE. ETAT DE LA TECHNIQUE

Le procédé Bayer, largement décrit dans la littérature spécialisée et bien connu de l'homme de l'art, constitue la technique essentielle de production de l'alumine destinée à être transformée en aluminium par électrolyse ignée. Selon ce procédé, le minerai de bauxite est traité à chaud au moyen d'une solution aqueuse d'hydroxyde de sodium, à concentration appropriée, provoquant ainsi la solubilisation de l'alumine et l'obtention d'une solution sursaturée d'aluminate de sodium. Après séparation de la phase solide constituant le résidu inattaqué (boues rouges) du minerai, la solution sursaturée d'aluminate de sodium est ensemencée avec des particules de trihydroxyde d'aluminium dans le but de provoquer la précipitation du trihydroxyde d'aluminium.

La liqueur d'aluminate de sodium appauvrie en alumine est recyclée à l'étape de l'attaque après avoir été concentrée et rechargée en hydroxyde de sodium pour rétablir la concentration appropriée à l'attaque du minerai.

Mais, en même temps que l'alumine est dissoute à l'état d'aluminate de sodium, la solution d'aluminate de sodium sursaturée résultant de l'attaque se charge de matières organiques sous forme de sels de sodium, dont l'oxalate est l'un de composants les plus gênants.

L'accumulation de ces impuretés organiques dans la solution d'aluminate de sodium du procédé Bayer provoque des inconvénients majeurs, que l'homme de métier a tenté et tente encore de maîtriser.

Les inconvénients associés en particulier à l'accumulation de l'oxalate de sodium dans les solutions Bayer, procèdent du fait que le dit oxalate, atteignant son niveau critique de sursaturation, précipite sous forme de fines aiguilles sur l'amorce d'hydroxyde d'aluminium. Les fines aiguilles d'oxalate de sodium agissent aussi comme de véritables germes pour la précipitation de l'hydroxyde d'aluminium en provoquant une augmentation du nombre des fines particules qui deviennent ainsi trop nombreuses pour être efficacement contrôlées pendant la décomposition de l'aluminate de sodium.

Le seuil critique de sursaturation au-delà duquel l'oxalate de sodium précipite spontanément varie avec la nature de la liqueur. Il est d'autant plus élevé que la liqueur contient des matières organiques peu dégradées.

Ce phénomène est largement décrit par G. Lever dans "Some aspects of the chemistry of bauxite organic on the Bayer process : the sodium oxalate bumate interaction. ICSOBA-1983". Il est particulièrement sensible lors de l'attaque à haute température (t > 200° C) des bauxites riches en matières humiques où le taux d'oxalate augmente rapidement par suite de la dégradation des matières organiques, mais où le seuil critique de sursaturation est relativement peu élevé du fait même de la dégradation desdites matières organiques.

Ce phénomène de précipitation de l'oxalate de sodium affecte les qualités physico-chimiques du trihydroxyde d'aluminum précipité et conduit, par exemple, à de grandes variations de la granulomètrie de l'alumine produite ou encore à une fragilité accrue des grains d'alumine qui peuvent représenter des inconvénients majeurs pour l'utilisation de cette alumine dans la production de l'aluminium par électrolyse.

Dès lors, il se révèle nécessaire dans les opérations industrielles de production de l'alumine, de contrôler ou mieux d'éviter la contamination de l'amorce de trihydroxyde d'aluminium pendant l'étape de décomposition par de l'oxalate de sodium précipité.

Un premier procédé bien connu de l'homme de l'art consiste à traiter par de la chaux la liqueur de lavage du trihydroxyde d'aiuminium produit dans le cycle Bayer, afin de précipiter l'oxalate présent sous la forme du sel de calcium et de l'éliminer du cycle de fabrication tandis que la liqueur de lavage appauvrie en oxalate est recyclée.

Une variante de ce procédé, bien connue de l'homme de l'art, consiste en outre à laver une partie de l'amorce de trihydroxyde d'aluminium et à traiter la liqueur de lavage de ladite amorce par de le chaux.

De tels procédés permettent seulement de limiter la contamination en oxalate de sodium et étaient satisfaisants pour l'homme de métier tant que l'alumine recherchée pour l'électrolyse et produite selon ces procédés avait un caractère plâtreux.

Mais l'évolution de la technologie des cuves d'électrolyse exige aujourd'hui une alumine sableuse, de granulomètrie régulière et de bonne résistance mécanique, toutes qualités que l'homme de l'art sait difficilement accessibles par les procédés de traitement précités.

Pour aboutir à de telles qualités, il est souhaitable d'éviter la précipitation de l'oxalate de sodium sur l'amorce de trihydroxyde d'aluminium. Il devient alors indispensable de maintenir la concentration en oxalate de sodium dans la liqueur d'aluminate de sodium à la décomposition, à une valeur inférieure à sa concentration critique de sursaturation.

Divers procédés ont été proposés pour limiter, dans le cycle Bayer, la quantité d'oxalate de sodium en solution dans les liqueurs Bayer.

Un procédé décrit dans le brevet US-A-3 899 571 et la demande EP-A-0 013 407 consiste à traiter une liqueur Bayer sursaturée par rapport à la solubilité à l'équilibre d'oxalate de sodium (telles que les liqueurs appauvries en aluminate de sodium issues de la décomposition, reconcentrées ou non) par introduction d'une amorce d'oxalate de sodium recyclée pour provoquer la précipitation de l'oxalate de sodium en solution et aboutir à la concentration de l'équilibre de solubilité de l'oxalate de sodium anhydre.

Après une séparation solide-liquide, la liqueur épurée est alors réintroduite dans le cycle Bayer tandis qu'une fraction de la phase solide d'oxalate de sodium est utilisée pour la préparation de la suspension de cristaux d'amorce, l'autre fraction étant éliminée du cycle.

Bien que ce procédé offre des moyens intéressants pour effectuer la précipitation de l'oxalate de sodium par amorçage, il présente toutefois des inconvénients qui apparaissent gênants lors de son application industrielle.

En effet, les cristaux d'oxalate de sodium constituant l'amorce deviennent assez rapidement inactifs par empoisonnement de leur surface par les matières organiques présentes. Plus que cela, les matières organiques présentes exigent, pour les cristaux d'oxalate de sodium, un lavage de réalisaton délicate. Car, dans le cas où le lavage se révèle insuffisant, il apparaît une baisse d'activité de l'amorce et dès lors une diminution du rendement de précipitation de l'oxalate de sodium. Et, dans le cas où le lavé est trop poussé, il se manifeste un affinement granulométrique de l'amorce, qui conduit à des séparations liquide-solide difficiles et dès lors à des baisses de rendement de purification.

Un autre procédé pour limiter la quantité d'oxalate de sodium dans les liqueurs Bayer, décrit dans le FR-A-2 317 226 et US-A-4 038 039 consiste à concentrer par évaporation une partie de la liqueur provenant de la décomposition de l'aluminate de sodium, afin de la rendre sursaturée en oxalate de sodium puis à rompre cette sursaturation par pulvérisation de la liqueur concentrée et refroidie, en fines gouttelettes sur un garnissage de tournure d'acier, la déstabilisation de la sursaturation étant provoquée par le choc mécanique des gouttelettes sur le garnissage et la rapide évaporation de la phase liquide, conséquence du rapport élevé entre la surface des gouttelettes et leur volume.

Mais un tel procédé, qui est à temps de séjour très bref, exige de disposer d'un volume important de liqueur à traiter. Et cette liqueur, qui doit être concentrée par évaporation, est ensuite refroidie (de 10° à 15°C) avant d'être pulvérisée sur la tournure d'acier. Ainsi, le procédé exige d'abord l'usage d'une technologie spécifique, mais surtout, se révèle être un grand consommateur d'énergie, d'abord pour la concentration par évaporation de la liqueur à traiter et ensuite le refroidissement de cette liqueur avant sa pulvérisation sur la tournure métallique.

Un autre procédé, enfin, pour limiter la quantité d'oxalatde sodium dans les liqueurs Bayer décrit dans les brevets US-A-4 275 043 et US-A-4 275 042 consiste à provoquer la précipitation de l'oxalate de sodium par adsorption sélective sur du charbon actif ou par un séquestrant cationique, des matières organiques responsables de la stabilité de la sursaturation de l'oxalate de sodium. Puis, après une séparation solide-liquide, la liqueur appauvrie en oxalate de sodium est réintroduite dans le cycle Bayer, tandis que l'oxalate précipité est extrait du circuit en même temps que le charbon actif, ce dernier pouvant être ultérieurement régénéré par un traitement thermique. Mais, le procédé tel qu'il est décrit, n'offre pas toute l'efficacité que l'on pouvait attendre, à tel point quil est conseillé de compléter son action par l'introduction d'une amorce d'oxalate de sodium.

Ainsi, aussi séduisants soient-ils, les procédés antérieurs présentent des inconvénients qui peuvent être majeurs, dès lors que l'homme de métier souhaite limiter, dans le cycle Bayer, la quantité d'oxalate de sodium en solution dans les liqueurs, pour les raisons précitées.

C'est pourquoi, la demanderesse a trouvé et mis au point un procédé de purification de solutions alcalines provenant de préférence de la décomposition de l'aluminate de sodium du cycle Bayer, pour limiter d'une manière contrôlée la quantité d'oxalate de sodium dans la liqueur de production du trihydroxyde d'aluminium.

## OBJET DE L'INVENTION ET MISE EN OEUVRE

Le procédé selon l'invention qui consiste à traiter tout ou partie d'une liqueur du cycle Bayer, de préférence après décomposition de l'aluminate de sodium, avant ou après sa concentration, par un agent de déstabilisation de l'état de sursaturation de l'oxalate de sodium en solution, se caractérise en ce que l'agent de déstabilisation provoquant la précipitation de l'oxalate de sodium est choisi dans le groupe comprenant l'oxalate de calcium et l'oxalate de baryum et que dans le cas de liqueurs chargées en matières organiques dégradées, issues généralement de l'attaque à haute température de bauxites riches en matières humiques, un polyélectrolyte anionique de synthèse de masse moléculaire élevée est introduit au préalable dans les dites liqueurs en un point quelconque du cycle Bayer.

Selon l'invention, l'agent de déstabilisation, constitué par de l'oxalate de calcium ou de baryum, est ajouté à au moins une partie de la solution d'aluminate de sodium, provenant de préférence de la décomposition, préalablement ou après sa concentration. L'oxalate de calcium ou de baryum, instable dans ces conditions, libère l'ion oxalate. Il en résulte une augmentation de la concentration en oxalate de sodium telle que le seuil critique de sursaturation dans la solution se trouve dépassé et que l'oxalate de sodium précipite spontanément en entraînant en partie avec lui des matières organiques responsables de son état de sursaturation initiale.

Une partie de l'oxalate précipité est recyclée vers l'étape d'épuration selon une procédure particulière, car, en raison des matières organiques présentes, l'oxalate précipité ne peut être recyclé tel quel. En effet, la dissolution en tout ou partie de l'oxalate précipité contenant les matières organiques aurait pour conséquence une augmentation du seuil critique de sursaturation en oxalate dans la liqueur à épurer.

Dès lors que la séparation des matières organiques de l'oxalate précipité est nécessaire avant toute action de recyclage, celle-ci est effectuée en remettant au moins partiellement en solution aqueuse l'oxalate de sodium précipité, et en traitant la suspension obtenue au moyen de chaux (CaO) ou d'aluminate de baryum $(Al_2O_4Ba)$. Ce traitement conduit à l'obtention d'un précipité d'oxalate de calcium ou d'oxalate de baryum qui, débarrassé des matières organiques par une séparation solide-liquide, est recyclé à la précipitation de l'oxalate de sodium.

Toujours selon l'invention, la liqueur épurée après séparation de la phase solide est réintroduite dans le circuit Bayer. Sa teneur résiduelle en oxalate de sodium correspond à la limite de solubilité de l'oxalate de sodium dans les conditions de l'expérimentation, appelée solubilité apparente. La différence entre le seuil critique de sursaturation et la solubilité apparente de l'oxalate de sodium dans la solution d'aluminate de sodium traduit l'importance donc l'efficacité de l'épuration.

Il résulte de cette observation que plus le seuil critique de sursaturation est élevé, meilleur est le taux d'épuration de la solution en oxalate de sodium. Ainsi, dans le cas particulier des liqueurs Bayer riches en matières organiques dégradées, résultant généralement de traitements d'attaque de bauxite à haute température, qui se caractérisent par un seuil critique de sursaturation peu différent de la limite de solubilité apparente, le taux d'épuration en oxalate est alors faible, ce qui limite l'intérêt économique du procédé, compte tenu des importants volumes de solutions à traiter.

Forte de ces observations, la demanderesse poursuivant ses recherches dans le but d'améliorer l'efficacité du procédé selon l'invention dans son application notamment aux traitements des bauxites à haute température, a constaté qu'il était possible d'élever le seuil critique de sursaturation de l'oxalate de sodium par ajout préalable dans la solution d'aluminate de sodium, à une étape quelconque du cycle Bayer mais de préférence avant l'étape de précipitation du trihydroxyde d'aluminium, d'un polyélectrolyte anionique de synthèse de masse moléculaire $M > 10^4$ grammes par mole dont la propriété inattendue est de se substituer de façon durable comme stabilisant aux matières organiques naturelles ou faisant défaut dans la liqueur.

Ce polyélectrolyte anionique est choisi dans le groupe comprenant les acides polyacryliques, les polyacrylamides, les polystyrènes sulfonates de sodium, les copolymères de polyacrylate de sodium et de polyacrylamide. Largement utilisés comme floculants, ces composés organiques de synthèse sont également connus pour leurs propriétés de stabilisant de l'oxalate de sodium dans la liqueur Bayer (communication de Gordon Lever ICSOBA déjà citée) au même titre que les matières humiques contenues dans les bauxites. Cependant, comme il est bien connu de l'homme de l'art, ces matières humiques sont rapidement dégradées dans le cycle à haute température d'attaque, si bien que leur action stabilisatrice sur la sursaturation en oxalate de sodium des liqueurs issues de tels traitements, est très faible. Or, lors des nombreuses expériences effectuées par la demanderesse par ajout de ces différents floculants en diverses proportion à la liqueur Bayer, il s'est avéré de façon surprenante que dans des proportions pondérales comprises entre $5.10^{-3}$ et $10^{-3}$ comptées par rapport au poids de $Na_2O$ caustique de la liqueur Bayer, ces floculants avaient une action stabilisante régulière et durable. C'est ainsi que la demanderesse a observé des accroissements de 500 à 800 % de l'efficacité d'épuration, mesurée par la différence entre le seuil critique de sursaturation et la limite de solubilité apparente; cette efficacité d'épuration étant conservée sans nouvel ajout de stabilisant sur plusieurs dizaines de cycles d'attaque, cela quelles que soient la concentration en $Na_2O$ caustique et la température de la liqueur d'attaque dans les plages habituellement pratiquées dans le cycle Bayer ($Na_2O$ caustique 100 à 250 g/litre; température 100 à 290°C).

Les faibles quantités de floculants utilisées par rapport aux volumes de liqueur traités, la possibilité de procéder à l'ajout de floculant à la liqueur Bayer sans préparation particulière sont autant d'éléments qui rendent le perfectionnement très simple de réalisation quand il est nécessaire de l'appliquer préalablement au traitement d'épuration des liqueurs Bayer.

Ce traitement d'épuration des liqueurs Bayer provenant de préférence de la décomposition de l'aluminate de sodium s'effectue avant ou après l'étape de concentration à la température de la liqueur elle-même, ou après refroidissement.

Ainsi, et d'une manière générale, la température à laquelle s'effectue le traitement d'épuration est choisie dans l'intervalle 20° à 80°C et préférentiellement dans l'intervalle 50° à 70°C.

La quantité d'agent de déstabilisation de l'état de sursaturation de l'oxalate de sodium introduit dans la liqueur Bayer à traiter pour provoquer la précipitation de l'oxalate de sodium, exprimée sous la forme anhydre d'oxalate de calcium ou de baryum, est généralement comprise, dans le cas où l'agent est l'oxalate de calcium, entre 0,5 et 15 g/l et préférentiellement entre 1,0 et 5,0 g/l et dans le cas où l'agent est l'oxalate de baryum, généralement comprise entre 0,5 et 25 g/l et préférentiellement entre 1 et 10 g/l.

Après la précipitation de l'oxalate de sodium présent dans au moins une fraction de la liqueur Bayer, prélevée de préférence après la décomposition de l'aluminate de sodium, par l'introduction d'oxalate de calcium ou de baryum, puis une séparation solide-liquide, permettant de réintroduire dans le cycle Bayer la liqueur épurée, la phase solide ainsi séparée est, pour au moins une fraction, soumise à une dissolution au moins partielle dans de l'eau quand l'agent de déstabilisation est l'oxalate de calcium et dans une solution alcaline quand l'agent de déstabilisation est l'oxalate de baryum. Cette redissolution s'effectue à une température au plus égale à l'ébullition et de préférence comprise entre 70° et 90°C.

Quand l'agent de déstabilisation est l'oxalate de calcium, ce dernier est obtenu en faisant réagir l'oxalate de sodium précipité avec un lait de chaux, préparé dans de l'eau. Le volume de lait utilisé dans cette étape est généralement compris entre 50 et 500 litres et préférentiellement entre 100 et 200 litres par tonne d'alumine produite.

Quand l'agent de déstabilisation est l'oxalate de baryum, ce dernier est obtenu en faisant réagir sur l'oxalate de sodium précipité, de l'aluminate de baryum en présence d'une liqueur de lavage prélevée dans le cycle Bayer, et de concentration en $Na_2O$ comprise généralement entre 20 et 80 g/l. Le volume de liqueur utilisé dans cette étape est généralement compris entre 50 et 500 litres et préférentiellement entre 100 et 200 litres par tonne d'alumine produite.

Les quantités de CaO ou d'$Al_2O_4Ba$ choisies dans les intervalles de concentration précités, utilisées pour la préparation de l'agent de déstabilisation sont telles quelles assurent à la fois la formation dudit agent et la précipitation du carbonate présent dans la liqueur d'imprégnation du gâteau d'oxalate de sodium précipité, ainsi que du carbonate présent dans la liqueur de lavage prélevée dans le cycle Bayer, lorsque l'agent de déstabilisation est l'oxalate de baryum.

La suspension d'oxalate de calcium ou d'oxalate de baryum ainsi obtenue est alors soumise à une séparation solide-liquide. La phase solide d'oxalate de calcium ou de baryum constitue en tout ou partie l'agent de déstabilisation de l'état de sursaturation de l'oxalate de sodium présent dans la liqueur du cycle Bayer à purifier en oxalate, ladite liqueur ayant été prélevée après la décomposition de l'aluminate de sodium.

La phase liquide contenant les matières organiques est réintroduite dans le cycle Bayer quand l'agent de déstabilisation est l'oxalate de calcium, ou bien est purifiée des ions baryum par un moyen connu de l'homme de l'art, tel que par exemple selon FR-A-2 328 660, avant d'être réintroduite dans le cycle Bayer, quand l'agent de déstabilisation est l'oxalate de baryum.

L'invention sera mieux comprise grâce à la description chiffrée d'un schéma général de traitement selon l'invention.

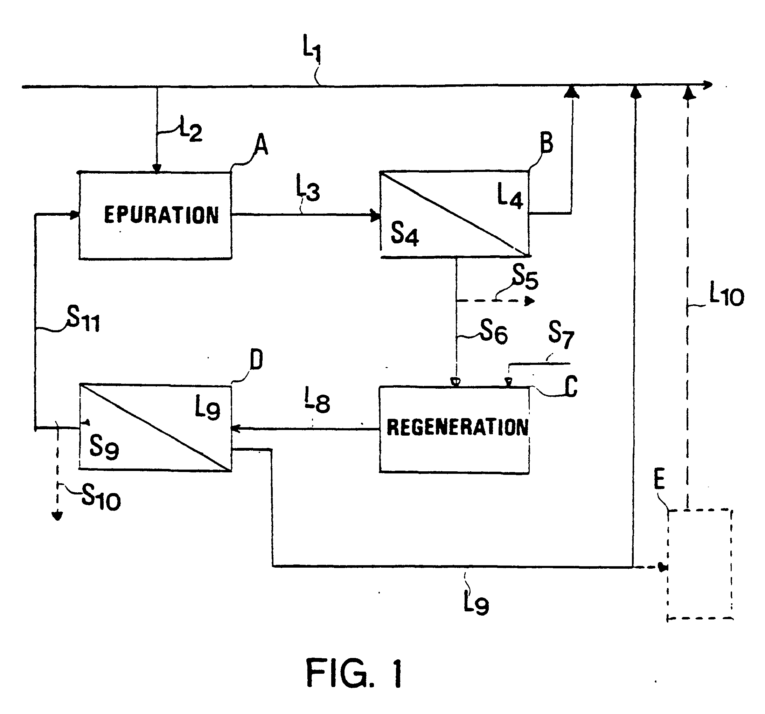

Selon la figure, la liqueur Bayer L1 provenant de préférence de la zone de décomposition de la solution d'aluminate de sodium, appauvrie en alumine et sursaturée en oxalate de sodium, et retournant à l'attaque du minerai de bauxite, est soumise au prélèvement d'une fraction L2, préalablement ou après concentration, destinée à être soumise au traitement selon l'invention.

La fraction L2 ainsi prélevée est introduite dans la zone d'épuration (A) de même que la fraction solide S11 constituée en partie par de l'oxalate de calcium ou de l'oxalate de baryum recyclés.

Le traitement d'épuration dans la zone (A) s'effectue sous agitation et dans le domaine de températures précité. La suspension obtenue L3 est soumise à une séparation solide-liquide en (B). La liqueur épurée L4 issue de cette opération est recyclée dans le circuit de la liqueur Bayer L1.

La phase solide S4 est constituée pour une fraction par de l'oxalate de sodium précipité dans la zone d'épuration (A) et pour l'autre fraction par de l'aluminate tricalcique hexahydraté dans le cas de l'utilisation de l'oxalate de calcium ou de carbonate de baryum dans le cas de l'utilisation de l'oxalate de baryum comme agent de déstabilisation.

Lorsque l'agent de déstabilisation utilisé est de l'oxalate de calcium, la phase solide S4 est en partie extraite du cycle selon S5 constituant ainsi la sortie de l'oxalate éliminé du cycle Bayer, tandis que la partie restante S6 est introduite dans la zone (C) où elle est traitée par de la chaux, elle-même introduite selon S7 sous la forme d'un lait.

L'oxalate de sodium constituant une partie de S6 est, dès lors, transformé en oxalate de calcium.

La suspension L8 résultant de ce traitement est soumise à une séparation solide-liquide en (D), la phase liquide L9 étant recyclée dans le circuit Bayer L1, tandis que la phase solide S9 constituant l'agent de déstabilisation de la sursaturation en oxalate de sodium de la liqueur L2 est introduite selon S11 dans la zone d'épuration (A).

Lorsque l'agent de déstabilisation utilisé est de l'oxalate de baryum, la phase solide S4 est introduite en totalité, selon S6 dans la zone (C) où elle est traitée par de l'aluminate de baryum introduit selon S7 avec une liqueur diluée en $Na_2O$.

L'oxalate de sodium constituant une partie de S6 est transformé en oxalate de baryum. La suspension L8, résultant du traitement, est soumise à une séparation solide-liquide en (D). La phase liquide L9 contenant les matières organiques stabilisantes est alors conduite dans la zone (E) où elle subit une épuration des ions baryum selon un quelconque procédé connu de l'homme de l'art.

Une fraction de la phase solide S9 est extraite selon S10 et constitue la sortie de l'oxalate éliminé du cycle Bayer. Cette fraction S10 est calcinée avec un apport d'alumine selon le procédé décrit dans le FR-A-2 328 660 dans le but de régénérer l'aluminate de baryum et d'éliminer l'oxalate sous forme de gaz carbonique $CO_2$.

L'autre fraction de la phase solide S9, constituant l'agent de déstabilisation de la sursaturation en oxalate de sodium de la liqueur L2 est introduite selon S11, dans la zone d'épuration (A) de ladite liqueur.

En pratique, le procédé selon l'invention peut encore se présenter sous la forme d'un procédé par étapes dans lequel:

a) on prélève de préférence après la zone de décomposition du cycle Bayer une fraction d'une liqueur appauvrie en alumine, sursaturée en oxalate de sodium et éventuellement stabilisée par ajout d'un polyélectrolyte anionique de synthèse.

b) on traite cette fraction de liqueur dans une zone d'épuration au moyen d'oxalate de calcium ou d'oxalate de baryum, agent de déstabilisation de la sursaturation de l'oxalate de sodium dans ladite fraction pour provoquer la précipitation dudit oxalate de sodium.

c) on soumet la suspension provenant de la zone d'épuration, à une séparation solide-liquide en recyclant la phase liquide dans le circuit Bayer.

d) on traite, pour la régénérer, la phase solide résultant de la séparation (c):

d1) en partie par un lait de chaux quand l'agent de déstabilisation est l'oxalate de calcium, l'autre partie étant extraite du circuit de traitement constituant ainsi la sortie de l'oxalate éliminé du circuit Bayer,

d2) en totalité par de l'aluminate de baryum en présence d'une liqueur diluée en $Na_2O$, quand l'agent de destabilisation est l'oxalate de baryum.

e) on soumet la suspension provenant de l'étape (d) de régénération, à une séparation solide-liquide, la phase solide étant:

e1) en totalité introduite dans la zone d'épuration correspondant à l'étape (b) quand l'agent de detabilisation est l'oxalate de calcium,

e2) en partie introduite dans la zone d'épuration correspondant à l'étape (b), quand l'agent de detabilisation est l'oxalate de baryum, l'autre partie étant extraite du circuit de traitement en constituant la sortie de l'oxalate éliminé du circuit Bayer.

f) la phase liquide provenant de l'étape (e):

f1) est recyclée dans le circuit Bayer, quand l'agent de destabilisation de la sursaturation est l'oxalate de calcium,

f2) contenant les matières organiques stabilisantes, est soumise à une épuration des ions baryum avant d'être réintroduite dans le cycle Bayer.


**EXEMPLE 1** (illustré par la figure)

On a traité selon la procédé de l'invention, une liqueur industrielle L2, pauvre en aluminate de sodium, et sursaturée en oxalate de sodium provenant du traitement par le procédé Bayer d'une bauxite tropicale.

La liqueur L2 prélevée dans le cycle Bayer L1 avait la composition suivante:

| | |
|---|---|
| $Na_2O$ caustique | 200g/l |
| $Na_2O$ carbonatée | 25g/l |
| $Al_2O_3$ | 120g/l |
| Carbone organique exprimé en C | 7,2g/l |
| Oxalate de sodium exprimé en C | 0,7g/l |

1000 millilitres de cette liqueur L2 ont été placés dans un réacteur (A) et maintenus à une température constante de 60°C. 3.2 g d'oxalate de calcium S11, agent de déstabilisation de la sursaturation en oxalate de sodium, étaient ajoutés à la liqueur précitée. L'ensemble était maintenu sous agitation pendant 4 heures.

A l'issue du traitement en (A), la suspension L3 était soumise à une séparation solide-liquide des phases en (B).

L'analyse de la phase liquide séparée L4 donnait une teneur de 0,4 g/l en carbone oxalique.

La phase S4 constituant le gâteau de filtration qui contient l'aluminate tricalcique hexahydraté formé au cours de la réaction de décomposition de l'oxalate de calcium dans la liqueur traitée, ainsi que l'oxalate de sodium précipité était séparée deux fractions S5 et S6.

La fraction S5 qui correspondait à la quantité d'oxalate de sodium épuré, et qui représentait environ 30 à 35 % de la masse totale du gâteau, était éliminée.

La fraction S6 était reprise et traitée dans la zone (C) de régénération au moyen de 150 millilitres d'un lait de chaux contenant 17 g/l de CaO. Le milieu ainsi formé était maintenu sous agitation à 80°C pendant 2 heures, afin de transformer l'oxalate de sodium de la fraction S6 en oxalate de calcium.

A la sortie de la zone de régénération (C), la suspension était soumise à une séparation solide-liquide.

La liqueur L9 purifiée en oxalate était alors apte à être recyclée dans L1 et la phase solide S9 était recyclée dans la zone d'épuration (A).

On a répété à cinq reprises le recyclage de la phase solide S9 en (A) en utilisant la première fois de l'oxalate de calcium pur et les quatre autres fois, de l'oxalate de calcium obtenu dans l'étape (C) de régénération.

A chacun de ces recyclages en (A), du précipité S9, on traitait à nouveau 1000 millilitres de la liqueur L2 précitée.

Au terme de ces cinq épurations successives, les quantités de carbone oxalique épuré étaient les suivantes:

| premier cycle d'épuration | 0,30 g/l |
| deuxième cycle d'épuration | 0,28 g/l |
| troisième cycle d'épuration | 0,31 g/l |
| quatrième cycle d'épuration | 0,29 g/l |
| cinquième cycle d'épuration | 0,30 g/l |

A titre de comparaison, on a effectué le traitement de 1000 millilitres de la même liqueur industrielle L2, sursaturée en oxalate de sodium et appauvrie en aluminate de sodium, en utilisant une solution aqueuse saturée en oxalate de sodium, 3,35 g/l d'oxalate de sodium ont été introduits dans la liqueur industrielle L2.

La quantité d'oxalate de sodium épurée dans la zone (A) et séparée de la phase liquide L4 en (B), était alors de 0,29 g/l.

Après l'élimination de la fraction solide S5, correspondant à cette quantité épurée, la fraction S6 était dissoute dans l'eau et la solution aqueuse d'oxalate de sodium ainsi obtenue était recyclée dans la zone d'épuration (A) pour un nouveau traitement de la liqueur industrielle L2. La quantité de carbone oxalique épuré était seulement de 0,11 g/l, alors que selon l'invention, la quantité de carbone oxalique épuré dans la zone (A) variait dans l'intervalle de 0,28 à 0,31 g/l.

**EXEMPLE 2** (illustré par la figure)

On a traité selon le procédé de l'invention, la même liqueur L2 sursaturée en oxalate de sodium, mais appauvrie en aluminate de sodium au moyen de 3,2 g/l d'oxalate de calcium ajoutée à la liqueur à traiter.

Trois essais ont été réalisés, chacun à une température particulière de traitement d'épuration dans la zone (A) (50° 60° et 70°C), tout en suivant le même protocole que celui décrit dans l'exemple 1 pour les autres paramètres.

Pour chaque essai, on a mesuré la quantité en gramme par litre de carbone oxalique épuré dans la zone d'épuration (A) et soumis à une séparation physique en (B).

Tous les résultats ont été consignés dans le tableau ci-après:

| Température en °C | 50 | 60 | 70 |
| --- | --- | --- | --- |
| Carbone oxalique épuré en g/l | 0,33 | 0,30 | 0,26 |

**EXEMPLE 3**

On a traité selon le procédé, une liqueur industrielle L2 pauvre en aluminate de sodium et sursaturée en oxalate de sodium provenant de l'attaque à haute température par le procédé Bayer d'une bauxite méditerranéenne.

Cette liqueur industrielle L2 avait la composition suivante:

| | |
| --- | --- |
| $Na_2O$ caustique | 200g/l |
| $Na_2O$ carbonatée | 22g/l |
| $Al_2O_3$ | 120g/l |
| Carbone organique exprimé en C | 5g/l |
| Oxalate de sodium exprimé en C | 0,42g/l |
| Seuil de sursaturation critique en oxalate de sodium exprimé en C | 0,45g/l |

10.7 g d'oxalate de calcium ont été ajoutés à 1000 millilitres de cette liqueur, l'ensemble étant maintenu sous agitation à 60°C pendant 6 heures.

A l'issue du traitement, la suspension obtenue était filtrée et la phase liquide L4 titrait alors 0,38 g/l en carbone oxalique, soit, par rapport à la composition initiale, une élimination par précipitation de 0,04 g/l de carbone oxalique.

A titre comparatif, on a ajouté à cette même liqueur L2 dans trois essais distincts un polyélectrolyte anionique (marque Floerger-type AN 934 SH):

a) à raison de 10 mg/l soit 50 ppm rapportés au poids de $Na_2O$ caustique. Le seuil de sursaturation critique en oxalate de sodium de la liqueur exprimé en carbone oxalique est passé de 0,45 à 0,67 g/l. Après ajustement de la concentration en carbone oxalique à 0,63 g/l, par dissolution d'oxalate de sodium, la liqueur L2 était soumise au traitement par l'oxalate de calcium dans les conditions décrites auparavant. A l'issue, la suspension était filtrée et la phase liquide L4 avait une teneur de 0,39 g/l en carbone oxalique, soit une épuration par précipitation de 0,24 g/l de carbone oxalique par rapport à la composition ajustée à 0,63 g/l de carbone oxalique.

b) à raison de 20 mg/l soit 100 ppm rapportés au poids de Na$_2$O caustique. Le seuil de sursaturation critique en oxalate de sodium de la liqueur exprimé en carbone oxalique est passé de 0,45 à 0,75 g/l. Après ajustement de la concentration en carbone oxalique à 0,70 g/l par dissolution d'oxalate de sodium, la liqueur était soumise au même traitement que précédemment, qui conduisait à une épuration par précipitation de 0,28 g/l de carbone oxalique.

c) à raison de 60 mg/l soit 300 ppm rapportés au poids de Na$_2$O caustique. Le seuil de sursaturation critique en oxalate de sodium de la liqueur exprimé en carbone oxalique est passé de 0,45 à 0,82 g/l. Après ajustement de la concenration en carbone oxalique à 0,79 g/l, par dissolution d'oxalate de sodium, la liqueur était soumise au même traitement que précédemment, qui conduisait à une épuration par précipitation de 0,36 g/l de carbone oxalique.

Ainsi, dans ces trois essais comparatifs, l'efficacité de l'épuration a été accrue de respectivement 500, 600 et 800 % par rapport à l'essai témoin.


## EXEMPLE 4

On a ajouté une liqueur industrielle L2, de même provenance et de composition identique à celle de l'exemple 3, 20 mg/l du même polyélectrolyte (marque Floerger-type AN 934 SH). La liqueur a alors été portée à une température de 245°C pendant 8, 24, 48 et 72 heures. A l'issue de chaque temps de séjour, son seuil de sursaturation critique en oxalate de sodium était déterminé et un test d'épuration était réalisé selon le protocole décrit dans l'exemple Ib.

Les résultats ont été consignés dans le tableau ci-après:

| Temps de séjour à 245°C (heures) | 8 | 24 | 48 | 72 |
|---|---|---|---|---|
| Seuil de sursaturation critique en oxalate de sodium exprimé en C (g/l) | 0,74 | 0,77 | 0,75 | 0,76 |
| Carbone oxailque épuré en g/l | 0,27 | 0,28 | 0,29 | 0,28 |

L'on constate une excellente stabilité du seuil de sursaturation critique en oxalate de sodium qui confirme, malgré la température d'attaque élevée, l'efficacité du floculant dans le temps.


## EXEMPLE 5 (illustré par la figure)

On a traité en (A), selon l'invention, 1000 millilitres de la liqueur industrielle L2 de l'exemple 1, au moyen de 5,6 g d'oxalate de baryum. Le milieu correspondant était maintenu sous agitation pendant 4 heures à une température de 60°C.

La suspension L3, provenant de (A) était filtrée. Le filtrat L4 avait une teneur de 0,39 g/l en carbone oxalique.

Le gâteau S4 était repris dans la zone (C) de régénération dans 70 mililitres d'une liqueur aqueuse diluée, provenant du cycle Bayer, et contenant 40 g/l de Na$_2$O caustique.

On y ajoutait 13,2 g d'aluminate de baryum (contenant 40,5 % de BaO), puis la suspension était maintenue sous agitation à 80°C pendant une heure.

A l'issue d'une séparation en (D), la fraction solide S10 du gâteau S9 correspondait à la quantité d'oxalate de sodium épuré, représentant environ 34 % de la masse totale du solide sortie du cycle de traitement.

L'autre fraction solide S11 était recyclée à l'épuration (A) constituant l'agent de destabilisation de la sursaturation en oxalate dans l'épuration d'une nouvelle quantité (1000 millilitres) de liqueur L2.

Cinq épurations successives ont ainsi été réalisées sur cinq prélèvements de liqueur L2.

Les quantités de carbone oxalique épuré étaient exprimées en gramme par litre de liqueur traitée L2:

| | |
|---|---|
| premier cycle d'épuration | 0,30 g/l |
| deuxième cycle d'épuration | 0,31 g/l |
| troisième cycle d'épuration | 0,29 g/l |
| quatrième cycle d'épuration | 0,30 g/l |
| cinquième cycle d'épuration | 0,31 g/l |

**0 173 630**

**EXEMPLE 6** (illustré par la figure)

On a traité selon le procédé de l'invention, une liqueur industrielle, pauvre en aluminate de sodium sursaturée en oxalate de sodium, provenant du traitement d'une bauxite australienne par le procédé Bayer.

La liqueur prélevée L2 avait la composition suivante:

| | |
|---|---|
| $Na_2O$ caustique | 152g/l |
| $Na_2O$ carbonée | 44g/l |
| $Al_2O_3$ | 91g/l |
| carbone oxalique exprimé en C | 42,5g/l |
| oxalate de sodium exprimé en C | 1,03g/l |

1,6 g d'oxalate de calcium ont été ajoutés en (A), à 1000 mililitres de cette liqueur. L'ensemble a été maintenu sous agitation à 60°C pendant 4 heures.

A l'issue du traitement en (A) et d'une séparation par filtration en (B), le filtrat L4 avait une teneur en carbone oxalique de 0,51 g/l.

Comme dans les exemples 1 et 3, le gâteau S4 provenant de (B) était séparé en deux fractions S5 et S6:

- la fraction S5 représentant environ 60 % de la masse totale de S4 constituait la quantité d'oxalate de sodium éliminée du cycle de traitement selon l'invention,

- la fraction S6 était reprise en (C) par 130 millilitres d'un lait de chaux à 15 g/l de CaO (agitation pendant 2 heures à 80°C), permettant de transformer l'oxalate de sodium en oxalate de calcium.

Après séparation en (D), la fraction solide S9 était recyclée en (A) selon S11 pour réaliser l'épuration d'une nouvelle fraction de 1000 millilitres de la liqueur L2.

Cinq épurations ont été faites successivement, selon le procédé précité sur cinq prélèvements de la liqueur L2, avec recyclage de l'agent destabilisant provenant de l'opération précédente.

Au terme de ces cinq épurations successives, les quantités de carbone oxalique épuré pour 1000 millilitres de liqueur traitée, étaient les suivantes:

| | |
|---|---|
| premier cycle d'épuration | 0,52 g/l |
| deuxième cycle d'épuration | 0,52 g/l |
| troisième cycle d'épuration | 0,50 g/l |
| quatrième cycle d'épuration | 0,53 g/l |
| cinquième cycle d'épuration | 0,51 g/l |

**EXEMPLE 7** (illustré par la figure)

On a testé le procédé selon l'invention pendant une période de trois mois sur un pilote industriel fonctionnant en continu, dont les conditions moyennes d'exploitation sont décrites ci-après:

Un réacteur agité (A), d'un volume total de 500 titres, était alimenté:

-d'une part, par 50 litres/heure d'une liqueur industrielle L2 ayant la composition suivante:

| | |
|---|---|
| $Na_2O$ caustique | 201,8g/l |
| $Na_2O$ carbonatée | 26,6g/l |
| $Al_2O_3$ | 120g/l |
| oxalate de sodium exprimé en C | 0,74g/l |

- d'autre part, par 630 grammes/heure d'un solide imprégné, issu du traitement de recyclage du précipité d'oxalate de sodium, et contenant environ 34 % sur sec d'oxalate de calcium.

La température du réacteur (A) était réglée sur 60°C par circulation d'un fluide caloporteur en double enveloppe.

Le temps de séjour moyen de la liqueur était d'environ 6 heures.

La suspension provenant de (A) était véhiculée, par pompe, vers le filtre (B) qui était ainsi alimenté par une suspension à 15-20 g/l de matière sèche.

La liqueur L4 sortant du filtre (B) contenait:

| | |
|---|---|
| $Na_2O$ caustique | 200,5g/l |
| $Na_2O$ carbonatée | 27,2g/l |
| oxalate de sodium exprimé en C | 0,41g/l |

Le débit massique du gâteau S4 de la filtration (B) était de l'ordre de 1000 à 1200 g à l'heure. Ce gâteau S4 était séparé en deux fractions S5 et S6:

- la fraction S5 constituant la quantité d'oxalate de sodium éliminée du cycle de traitement représentait 280 g/h à 480 g/h,

- la fraction S6 représentant environ 720 g/h de gâteau imprégné, était introduite dans un réacteur agité (C) d'un volume utile de 50 litres, dont la température était réglée à 80°C, simultanément avec 15 l/h d'un lait de chaux contenant 4 g/l de CaO.

Après un temps de séjour de 2 heures, la suspension surversante L8 était soumise en (D) à une séparation solide-liquide. La fraction solide S9 constituait l'agent de déstabilisation (oxalate de calcium) recyclé vers l'étape d'épuration (A) par S11.

Ainsi, selon le procédé de l'invention, appliqué en continu, à une liqueur Bayer, il était possible d'extraire environ 1,8 kg d'oxalate de sodium (soit 0,32 kg de carbone oxalique) en traitant seulement 1000 litres de la liqueur L2, performance suffisante industriellement pour éviter toute précipitation d'oxalate de sodium sur l'amorce de trihydroxyde d'aluminium au cours de la cristallisation dudit trihydroxyde d'aluminium.

## Revendications

1. Procédé de purification d'au moins une fraction d'une solution d'aluminate de sodium provenant du cycle BAYER, prélevée de préférence après la décomposition de l'aluminate de sodium, avant ou après sa concentration, en provoquant la précipitation de l'oxalate de sodium en solution par l'introduction d'un agent de destabilisation de l'état de sursaturation de l'oxalate de sodium caractérisé en ce que l'agent de destabilisation de l'état de sursaturation introduit dans au moins une fraction de ladite solution pour provoquer la précipitation de l'oxalate de sodium est choisi dans le groupe comprenant l'oxalate de calcium, l'oxalate de baryum.

2. Procédé de purification d'au moins une fraction d'une solution d'aluminate de sodium selon la revendication 1 caractérisé en ce que dans le cas de solutions d'aluminate de sodium chargées en matières organiques dégradées, issues généralement de l'attaque à haute température de bauxites riches en matières humides, un polyélectrolyte anionique de synthèse a masse moléculaire M élevée avec de préférence $M > 10^4$ grammes par mole, est introduit au préalable dans lesdites solutions en un point quelconque du cycle BAYER.

3. Procédé de purification d'au moins une fraction d'une solution d'aluminate de sodium selon la revendication 2 caractérisé en ce que le polyélectrolyte anionique de synthèse est choisi dans le groupe comprenant: les acides polyacryliques, les polyacrylamides, les polystyrènes sulfonates de sodium, les copolymères de polyacrylate de sodium et polyacrylamide.

4. Procédé de purification d'au moins une fraction d'une solution d'aluminate de sodium selon les revendications 2 et 3 caractérisé en ce que le polyélectrolyte anionique de synthèse est introduit au préalable dans les solutions d'aluminate de sodium chargées en matières organiques dégradées, en un point quelconque du cycle BAYER et dans des proportions pondérales comprises entre $5.10^{-5}$ et $10^{-3}$ comptées par rapport au poids de $Na_2O$ caustique de la solution et de préférence entre $10^{-4}$ et $3.10^{-4}$.

5. Procédé de purification d'au moins une fraction d'une solution d'aluminate de sodium selon la revendication 1, caractérisé en ce que la température à laquelle s'effectue le traitement de purification de la liqueur BAYER est comprise entre 20° et 80°C et de préférence entre 50° et 70°C.

6. Procédé de purification d'au moins une fraction d'une solution d'aluminate de sodium selon les revendications 1 à 5, caractérisé en ce que la quantité d'agent de destabilisation de l'oxalate de sodium est introduit dans la liqueur BAYER à traiter est comprise entre 0,5 et 15 g/l et préférentiellement entre 1,0 et 5,0 g/l quand l'agent est l'oxalate de calcium.

7. Procédé de purification d'au moins une fraction d'une solution d'aluminate de sodium selon les revendications 1 à 5, caractérisé en ce que la quantité d'agent de déstabilisation de l'état de sursaturation de l'oxalate de sodium est comprise entre 0,5 et 25 g/l et préférentiellement entre 1,0 et 10 g/l quand l'agent est l'oxalate de baryum.

8. Procédé de purification d'au moins une fraction d'une solution d'aluminate de sodium selon l'une quelconque des revendications 1 à 6, caractérisé en ce que ledit agent est l'oxalate de Ca et une partie de la phase solide contenant l'oxalate de sodium, obtenue par l'introduction de l'agent de destabilisation est soumise à une dissolution au moins partielle dans de l'eau puis est traitée par un lait de chaux pour produire de l'oxalate de calcium, l'autre partie de la phase solide constituant la sortie de l'oxalate du cycle BAYER.

9. Procédé de purification d'au moins une fraction de solution d'aluminate de sodium selon l'une quelconque des revendications 1, 2, 3, 4, 5, 7, caractérisé en ce que ledit agent est l'oxalate de Ba et la phase solide contenant l'oxalate de sodium, obtenue par l'introduction de l'agent de destabilisation est soumise à une dissolution au moins partielle dans une solution alcaline puis est traitée par de l'aluminate de baryum pour produire de l'oxalate de baryum.

10. Procédé de purification d'au moins une fraction d'une solution d'aluminate de sodium selon les revendications 8 ou 9, caractérisé en ce que la température de dissolution de l'oxalate de sodium est au plus égale à l'ébullition et préférentiellement comprise entre 70° et 90°C.

11. Procédé de purification d'au moins une fraction d'une solution d'aluminate de sodium selon les revendications 8 et 10, caractérisé en ce que l'oxalate de sodium précipité sous forme d'oxalate de calcium constitue l'agent de déstabilisation de la sursaturation recyclé dans une fraction de la solution d'aluminate de sodium.

**0 173 630**

12. Procédé de purification d'au moins une fraction d'une solution d'aluminate de sodium selon les revendications 9 et 10, caractérisé en ce que l'oxalate de sodium précipité sous forme d'oxalate de baryum constitue pour une partie l'agent de destabilisation de la sursaturation, recyclé dans une fraction de la solution d'aluminate de sodium à purifier, l'autre partie de l'oxalate de baryum constituant la sortie de l'oxalate du cycle BAYER.

13. Procédé de purification d'au moins une fraction d'une solution d'aluminate de sodium selon la revendication 12, caractérisé en ce que la partie d'oxalate de baryum constituant la sortie du cycle BAYER est traitée pour régénérer l'aluminate de baryum selon un moyen connu.

## Patentansprüche

1. Verfahren zur Reinigung mindestens einer Fraktion einer Natriumaluminatlösung aus dem Bayer-Verfahren, die vorzugsweise nach der Zersetzung des Natriumaluminats entnommen wurde, vor oder nach ihrer Konzentration durch Ausfällen des gelösten Natriumoxalats durch Zugabe eines Destabilisierungsmittels für den Übersättigungszustand des Natriumoxalats,
dadurch gekennzeichnet, daß das Destabilisierungsmittel für den Übersättigungszustand, das in mindestens eine Fraktion der Lösung zur Ausfällung des Natriumoxalats eingeführt wird, unter Calciumoxalat und Bariumoxalat ausgewählt wird.

2. Verfahren zur Reinigung mindestens einer Fraktion einer Natriumaluminatlösung nach Anspruch 1, dadurch gekennzeichnet, daß bei Natriumaluminatlösungen, die mit abgebautem organischem Material beladen sind, das im allgemeinen aus dem Aufschluß bei hohen Temperaturen von an feuchtem Material reichen Bauxiten stammt, ein synthetischer anionischer Polyelektrolyt mit einer hohen Molekülmasse M von vorzugsweise $M > 10^4$ g/mol vorher an einem beliebigen Punkt des Bayer-Verfahrens in die Lösungen eingeführt wird.

3. Reinigungsverfahren mindestens einer Natriumaluminatlösung nach Anspruch 2, dadurch gekennzeichnet, daß der synthetische anionische Polyelektrolyt unter Polyacrylsäuren, Polyacrylamiden, Natrium-Polystyrolsulfonaten und Natriumpolyacrylat-Polyacrylamid-Copolymeren ausgewählt wird.

4. Reinigungsverfahren mindestens einer Fraktion einer Natriumaluminatlösung nach Anspruch 2 oder 3, dadurch gekennzeichnet, daß der synthetische anionische Polyelektrolyt vorher in die mit abgebautem organischem Material beladenen Natriumaluminatlösungen an einem beliebigen Punkt des Bayer-Verfahrens eingeführt wird, und zwar in Mengen von $5 \cdot 10^{-5}$ bis $10^{-3}$ und vorzugsweise von $10^{-4}$ bis $3 \cdot 10^{-4}$, bezogen auf $Na_2O$ der Lösung.

5. Reinigungsverfahren mindestens einer Fraktion einer Natriumaluminatlösung nach Anspruch 1, dadurch gekennzeichnet, daß die Reinigung der Bayer-Lösung bei einer Temperatur von 20 bis 80°C und vorzugsweise von 50 bis 70°C durchgeführt wird.

6. Reinigungsverfahren mindestens einer Fraktion einer Natriumaluminatlösung nach den Ansprüchen 1 bis 5, dadurch gekennzeichnet, daß das Destabilisierungsmittel für das Natriumoxalat in die zu behandelnde Bayer-Lösung in einer Menge von 0,5 bis 15 g/l und vorzugsweise von 1,0 bis 5,0 g/l eingeführt wird, wenn das Mittel Calciumoxalat ist.

7. Reinigungsverfahren mindestens einer Fraktion einer Natriumaluminatlösung nach den Ansprüchen 1 bis 5, dadurch gekennzeichnet, daß das Destabilisierungsmittel für den Übersättigungszustand des Natriumoxalats in einer Menge von 0,5 bis 25 g/l und vorzugsweise von 1,0 bis 10 g/l eingeführt wird, wenn das Mittel Bariumoxalat ist.

8. Reinigungsverfahren mindestens einer Fraktion einer Natriumaluminatlösung nach einem der Ansprüche 1 bis 6, dadurch gekennzeichnet, daß als Destabilisierungsmittel Calciumoxalat verwendet wird und ein Teil der festen, Natriumoxalat enthaltenden Phase, die durch Einführen des Destabilisierungsmittels erhalten wird, zumindest teilweise in Wasser aufgelöst wird, dann mit Kalkmilch zur Herstellung von Calciumoxalat behandelt wird, wobei der andere Teil der festen Phase das aus dem Bayer-Verfahren entfernte Oxalat bildet.

9. Reinigungsverfahren mindestens einer Fraktion einer Natriumaluminatlösung nach einem der vorstehenden Ansprüche 1 bis 7, dadurch gekennzeichnet, daß als Destabilisierungsmittel Bariumoxalat verwendet wird und die das Natriumoxalat enthaltende feste Phase, die durch Einführung des Destabilisierungsmittels erhalten wird, zumindest teilweise in einer alkalischen Lösung gelöst und dann mit Bariumaluminat zur Herstellung von Bariumoxalat behandelt wird.

10. Reinigungsverfahren mindestens einer Fraktion einer Natriumaluminatlösung nach Anspruch 8 oder 9, dadurch gekennzeichnet, daß das Natriumoxalat bei einer Temperatur, die höchstens der Siedetemperatur entspricht, und vorzugsweise von 70 bis 90°C aufgelöst wird.

11. Reinigungsverfahren mindestens einer Fraktion einer Natriumaluminatlösung nach den Ansprüchen 8 und 10, dadurch gekennzeichnet, daß das in Form von Calciumoxalat ausgefällte Natriumoxalat als das in eine Fraktion der Natriumaluminatlösung zurückgeführte Destabilisierungsmittel für die Übersättigung verwendet wird.

12. Reinigungsverfahren mindestens einer Fraktion einer Natriumaluminatlösung nach den Ansprüchen 9 und 10, dadurch gekennzeichnet, daß das in Form von Bariumoxalat ausgefällte Natriumoxalat als ein Teil des Destabilisierungsmittels für die Übersättigung, das in eine Fraktion der zu reinigenden Natriumaluminatlösung

11

zurückgeführt wird, verwendet wird, wobei der andere Teil des Bariumoxalats das aus dem Bayer-Verfahren entfernte Oxalat bildet.

13. Reinigungsverfahren mindestens einer Fraktion einer Natriumaluminatlösung nach Anspruch 12, dadurch gekennzeichnet, daß der Teil des Bariumoxalats, das die aus dem Bayer-Verfahren entfernte Verbindung bildet, zur Wiedergewinnung des Bariumaluminats in an sich bekannter Weise behandelt wird.


## Claims

1. A process for the purification of at least a fraction of a sodium aluminate solution in the Bayer cycle, which is preferably taken off after decomposition of the sodium aluminate, before or after concentration thereof, by causing precipitation of sodium oxalate in solution by the introduction of an agent for destabilisation of the state of supersaturation of the sodium oxalate, characterised in that the supersaturation destabilisation agent introduced into at least a fraction of said solution to cause precipitation of the sodium oxalate is selected from the group comprising calcium oxalate and barium oxalate.

2. A process for purifying at least a fraction of a sodium aluminate solution according to claim 1, characterized in that, in the case of sodium aluminate solutions charged with degraded organic materials which generally result from high-temperature attack on bauxite with high proportions of humic materials, an anionic synthetic polyelectrolyte with a high molecular mass $M > 10^4$ grams per mole, is previously introduced into said solutions at any point in the Bayer cycle.

3. A process for purifying at least a fraction of a sodium aluminate solution according to claim 2, characterized in that said anionic synthetic polyelectrolyte is selected from the group comprising : polyacrylic acids, polyacrylamides, sodium polystyrene sulphonates, sodium polyacrylate and polyacrylamide copolymers.

4. A process for purifying at least a fraction of a sodium aluminate solution according to claim 1 and claim 2, characterized in that said anionic synthetic polyelectrolyte is previously introduced into sodium aluminate solution charged with degraded organic materials, at any point in the Bayer cycle, in proportions by weight of between $5.10^{-5}$ and $10^{-3}$ reckoned with respect to the weight of caustic $Na_2O$ of the solution and preferably between $10^{-4}$ and $3.10^{-4}$.

5. A process for purifying at least a fraction of a sodium aluminate solution according to claim 1, characterized in that the temperature at which the Bayer solution purification treatment is carried out is between 20°C and 80°C and preferably between 50°C and 70°C.

6. A process for purifying at least a fraction of a sodium aluminate solution according to claim 1 to claim 5, characterized in that the amount of sodium oxalate destabilisation agent introduced into the Bayer solution to be treated is between 0.5 and 15 g/l and preferably between 1.0 and 5.0 g/l when the agent is calcium oxalate.

7. A process for purifying at least a fraction of a sodium aluminate solution according to claim 1 to claim 5, characterized in that the amount of sodium oxalate supersaturation destabilisation agent is between 0.5 and 25 g/l and preferably between 1 and 10 g/l when the agent is barium oxalate.

8. A process for purifying at least a fraction of a sodium aluminate solution according to any one of claims 1 to 6, characterized in that said agent is calcium oxalate and a part of the solid phase containing sodium oxalate, which is produced by the introduction of the destabilisation agent, is subjected to at least partial dissolution in water and then treated with a limewash to produce calcium oxalate, the other part of the solid phase constituting the discharge of the oxalate from the Bayer cycle.

9. A process for purifying at least a fraction of a sodium aluminate solution according to any one of claims 1, 2, 3, 4, 5, 7, characterized in that said agent is barium oxalate and the solid phase containing the sodium oxalate, which is produced by the introduction of the destabilisation agent, is subjected to at least partial dissolution in an alkaline solution and then treated with barium aluminate to produce barium oxalate.

10. A process for purifying at least a fraction of a sodium aluminae solution according to claim 8 or claim 9, characterized in that the temperature of dissolution of the sodium oxalate is at most equal to the boiling temperature and preferably is from 70°C to 90°C.

11. A process for purifying at least a fraction of a sodium aluminate solution according to claims 8 and 10, characterized in that the sodium oxalate constitutes the supersaturation destabilisation agent which is recycled to a fraction of said solution to be purified.

12. A process for purifying at least a fraction of a sodium aluminate solution according to claims 9 and 10, characterized in that the sodium oxalate which is precipitated in the form of barium oxalate constitutes, in respect of one portion, the supersaturation destabilisation agent which is recycled to a fraction of said solution to be purified, the other portion of the barium oxalate constituting the discharge of the oxalate from the Bayer cycle.

13. A process for purifying at least a fraction of a sodium aluminate solution according to claim 12, characterized in that the portion of barium oxalate constituting the discharge from the Bayer cycle is treated to regenerate the barium aluminate in a known fashion.

FIG. 1